(19) Europäisches Patentamt
European Patent Office
Office européen des brevets

(11) **EP 2 998 666 A1**

(12) **EUROPÄISCHE PATENTANMELDUNG**

(43) Veröffentlichungstag:
23.03.2016 Patentblatt 2016/12

(21) Anmeldenummer: 15401097.9

(22) Anmeldetag: 16.09.2015

(51) Int Cl.:
*F25B 17/08* (2006.01)       *F24H 9/12* (2006.01)
*F25B 30/04* (2006.01)       *F24D 11/02* (2006.01)
*F24D 17/00* (2006.01)       *F24D 17/02* (2006.01)
*F28D 20/00* (2006.01)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA**

(30) Priorität: **18.09.2014 DE 102014113450**

(71) Anmelder: **Karlsruher Institut für Technologie
76131 Karlsruhe (DE)**

(72) Erfinder:
• **Schmidt, Ferdinand
76135 Karlsruhe (DE)**
• **Joshi, Chirag
76131 Karlsruhe (DE)**
• **Schwamberger, Valentin
72072 Tübingen (DE)**
• **Taheri, Hadi
47906 Kempen (DE)**

(54) **ADSORPTIVE WÄRMETRANSFORMATIONSANORDNUNG**

(57) Die vorliegende Erfindung stellt eine adsorptive Wärmetransformationsanordnung bereit, die zumindest zwei Adsorber **(4, 5)** aufweist, die mit zumindest einer Pumpe **(14, 15)**, einem Verdampfer **(7)** und einem Kondensator **(8)** verbunden sind. Der Wärmespeicher **(2)** weist eine Vielzahl von Be- und Entladeeinrichtungen **(9)** zur gleichzeitigen Einschichtung und/oder Entnahme eines Wärmeträgerfluids auf, wobei jede Be-und Entladeeinrichtung **(9)** über zumindest eine Zuführleitung **(35)** mit Wärmeträgerfluid beschickbar ist und zwei oder mehrere Zuführleitungen **(35)** miteinander fluidisch gekoppelt und mit zumindest einem Adsorptionsmodul **(1)** fluidisch gekoppelt sind.

Fig. 1

EP 2 998 666 A1

**Beschreibung**

Die Erfindung betrifft eine adsorptive Wärmetransformationsanordnung.

Aus dem Stand der Technik ist sind adsorptive Wärmetransformationsanordnungen bekannt. So gibt es Sorptions-Wärmepumpen, die zur Heizung von Gebäuden genutzt werden und Wärme höherer Temperatur, die mittels eines Gasbrenners bereitgestellt wird, nutzen. Ferner sind auch Sorptionskältemaschinen bekannt, die vornehmlich zu Kühlung eingesetzt werden, wobei bevorzugt Wärme mit einer Temperatur von kleiner 100 °C aus Solarkollektoren genutzt werden kann. In beiden Fällen wird das physikalische Prinzip von Adsorption und Desorption genutzt, wobei ein Temperaturbereich genutzt wird, bei dem Adsorptionswärme in einer Anlage abgeführt werden kann. Aus den differenziellen Wärmekurven von Adsorption und Desorption ergibt sich die maximal innerhalb des Zyklus rückgewinnbare Wärme. Durch eine interne Wärmerückgewinnung verringert sich die aus der externen Wärmequelle bereitzustellende Desorptionswärme, die Effizienz des Zyklus steigt.

Die WO 2008 034 561 A2 beschreibt eine Adsorptionswärmepumpe bzw. -kältemaschine, die einen thermisch geschichteten Wärmespeicher aufweist, der primär zur internen Wärmerückgewinnung zwischen einem Adsorptions- und Desorptions-Halbzyklus einer Wärmepumpe oder Kältemaschine genutzt wird und einen einzelnen Adsorber aufweist. Dadurch kann die Effizienz eines Zyklus, d.h., die sogenannte Arbeitszahl der Wärmepumpe, gegenüber einem Zyklus ohne Wärmerückgewinnung wesentlich gesteigert werden. Dieser Schichtspeicher nimmt das Wärmeträgerfluid auf und kann es in verschiedenen Schichten je nach seiner Temperatur speichern. Dabei kann bei verschiedenen Temperaturen Wärme aus dem Schichtspeicher entnommen werden und zurück gespeichert werden. Im Fall der Nutzung als Wärmepumpe kann mit Adsorbentien, die Desorptionstemperaturen von größer als 140°C erfordern, ein besonders großer Überlapp der Ad- und Desorptionswärmekurven erreicht werden und mithin eine besonders hohe Arbeitszahl der Wärmepumpe. Als Wärmeträgerfluid und Speichermedium ist in diesem Fall jedoch ein Thermoöl erforderlich, da im Fall der Verwendung von Wasser der Speicher auf einen hohen Druck ausgelegt werden müsste und als Druckbehälter gemäß der EU-Druckgeräterichtlinie zu behandeln wäre. In der Heizungstechnikbranche sind mit der Verwendung von Thermoöl jedoch sehr hohe Markteintrittsbarrieren verbunden, daher ist eine Adsorptionswärmepumpe dieser Art als Gaswärmepumpe zur Gebäudeheizung nur wenig geeignet. Bei Verwendung von Adsorbentien, die bei niedrigeren Temperaturen desorbiert werden können, kann zwar Wasser als Wärmeträger- und Speicherfluid verwendet werden, die erreichbare Effizienz verringert sich dann jedoch.

Allgemein erfolgt die Einschichtung in den Wärmespeicher bspw. durch Schichtladelanzen mit vielen Öffnungen, die innerhalb des Wärmespeichers vertikal angeordnet sind. Aufgrund der auftretenden Dichte- und Druckunterschiede des Fluides unterschiedlicher Temperatur schichtet sich das Fluid, wenn es aus den Öffnungen tritt, nahezu selbst ein. Jedoch tritt bei hohen Strömungsgeschwindigkeiten eine Vermischung der benachbarten Schichten vermehrt auf, wodurch eher ein kontinuierlicher Temperaturübergang als eine "diskrete" Schicht erzeugt wird.

Aufgrund der hohen spezifischen Wärmekapazität, der guten Wärmeübertragungseigenschaften und vernachlässigbarer Kosten ist Wasser in vielen Anwendungsfällen, wie in der Heizungstechnik, ein bevorzugtes Speichermedium. Bei der Verwendung von Desorptionstemperaturen von in etwa 130 °C tritt allerdings die Schwierigkeit auf, dass der Sättigungsdampfdruck des Wassers einen zulässigen Druck übersteigt, auf den wichtige Systemkomponenten, insbesondere im Heizungskreislauf, ausgelegt sind. Dieser Druck beträgt typischerweise 3 bar. Gerade bei Wärmespeichern darf der Dampfdruck den Systemdruck nicht überschreiten, um eine spontane Dampfbildung im Speicher zu verhindern. Daraus könnten beispielsweise Druckstöße in verschiedenen Anlagenkomponenten entstehen und diese beschädigen.

In EP 1 985 948 A1 wird eine Adsorptionswärmepumpe beschrieben, die eine temporäre hydraulische Entkopplung eines Teiles des Fluidkreislaufs beschreibt. Jedoch befindet sich dieser Kreislauf am Ende des Desorptionszyklus auf einer sehr hohen Temperatur (z.B. 140 °C), und bevor ein Ventil zum Heizkreislauf geöffnet werden kann, muss diese Temperatur verringert werden, um einen Druckstoß zu vermeiden. Zur temporären hydraulischen Entkopplung wird eine Ventilanordnung verwendet. Eine Umwälzpumpe wird für eine gewisse Nachlaufzeit eingeschaltet, um die Wärme des heißen Adsorbers zu verteilen und damit den Adsorber zu kühlen. Somit kann der Druck in diesem Kreislauf auf das Niveau des Heizungswasserdrucks reduziert werden. Dabei ist nachteilig, dass zur Kühlung des Sorptionsmaterials eine lange Nachlaufzeit benötigt wird und somit der Vorgang der Druckreduzierung in dem abgekoppelten Teil des Fluidkreises eine recht lange Zeit in Anspruch nimmt und die Leistung der Wärmepumpe reduziert ist.

Aus US 4 509 337 A1 ist eine solarthermisch betriebene Zeolith-Adsorptionskältemaschine bekannt, die einen temperaturgeschichteten Wärmespeicher aufweist. Das Gerät wird mit einem Tag-Nacht-Zyklus betrieben, wobei der Speicher primär als Pufferspeicher für kurze Phasen ohne Sonneneinstrahlung dient. Die Anordnung des Speichers ermöglicht jedoch keine Rückgewinnung von Adsorptionswärme für die nachfolgende Desorption.

In DE 10 2012 024 073 A1 wird ein Schichtwärmespeicher beschrieben, der Einschichtvorrichtungen zur Strömungsberuhigung aufweist. Dabei ist eine sehr feine Ansteuerung dieser Einschichtvorrichtungen notwendig, da hohe spezifische Volumenströme der Adsorber zwischen benachbarten Einschichtvorrichtungen auftreten.

Die DE 10 2011 102 036 B4 offenbart ein Wärmerückgewinnungssystem für eine Adsorptionswärmepumpe mit einem Zwischenspeicher als Wärmespeicher. Dieser Zwischenspeicher dient der Speicherung sensibler Wärme, die beim Temperaturwechsel einer Verdampfer/Kondensator-Komponente frei wird bzw. benötigt wird. Der Wärmespeicher zeigt in einer ersten Betriebsphase einen Temperaturgradienten, der zu einem Temperaturgradienten einer zweiten Betriebsphase innerhalb des Speichers in umgekehrter Richtung verläuft. Nachteilig ist somit fehlende Nutzung des Wärmespeichers als Schichtspeicher.

Weiterhin sind mehrstufige Adsorptionswärmepumpen bekannt, die mehrere Adsorber mit verschiedenen Adsorbentien enthalten, wobei Adsorptionswärme eines Adsorbers zur Desorption eines anderen Adsorbers verwendet wird. Eine mögliche Anordnung zur Realisierung so eines Prozesses wird beschrieben in der Dissertation von T. Nunez ("Charakterisierung und Bewertung von Adsorbentien für Wärmetransformationsanwendungen", Fakultät für Physik der Universität Freiburg, 2001).

Aus DE 199 08 666 A1 ist eine Adsorptionsmaschine mit zwei Adsorbern in einer sogenannten "thermal wave"-Anordnung beschrieben, wobei jedem Adsorber ein Wärmetauscher fest zugeordnet ist, der in einem Adsorptionshalbzyklus als Verdampfer und in einem Desorptionshalbzyklus als Kondensator arbeitet. Schichtspeicher dient dabei zur Wärmerückgewinnung. Jeder Wärmetauscher ist mit dem ihm zugeordneten Adsorber über einen Kanal für das Adsorptiv, ein dampfförmiges Arbeitsmittel verbunden.

Ferner beschreibt DE 34 08 193 C2 eine mehrstufige hybride Sorptionspumpe, die als Resorptions-Wärmepumpe mit einer Adsorptionsstufe als Hochtemperatur-Teil arbeitet. Es sind zwei Adsorber vorhanden, die mit zwei Vorratstanks verbunden sind und arbeitsmittelsreiche bzw. -arme Lösungen der Adsorptionsstufe der hybriden Wärmepumpe.

Mit solchen mehrstufigen Adsorptionsprozessen lassen sich sehr hohe Arbeitszahlen der Wärmepumpe erreichen, nachteilig ist bei den bisher bekannten Konzepten der hohe apparative Aufwand zur Realisierung des Prozesses.

Nachteilig beim vorgenannten Stand der Technik ist, dass die bisherige Konzeption von mehrstufigen Wärmepumpensystemen sehr komplex ist oder einstufige wenig effizient sind. Insbesondere bei der Verwendung des Wärmeträgerfluids Wasser und bei hohen Desorptionstemperaturen treten die oben beschriebenen Druckprobleme auf, die im Fall der Integration eines Wärmespeichers in den Adsorptionszyklus besonders gravierend sind.

Ausgehend von diesem Stand der Technik ist es daher **Aufgabe der vorliegenden Erfindung**, eine verbesserte Wärmetransformationsanordnung bereitzustellen, die für Wärmeträgerfluide mit hohem Sättigungsdampfdruck, wie Wasser, sicher genutzt werden kann.

Diese Aufgabe wird durch eine adsorptive Wärmetransformationsanordnung mit den Merkmalen des Anspruchs 1 gelöst.

Weiterbildungen bzw. bevorzugte Ausführungsformen der Wärmetransformationsanordnung sind in den Unteransprüchen ausgeführt.

Eine erfindungsgemäße adsorptive Wärmetransformationsanordnung weist zwei oder mehrere Adsorber auf, die mit einer oder mehreren Pumpe(n), einem Verdampfer und einem Kondensator verbunden sind. Ferner weist die Wärmetransformationsanordnung einen Wärmespeicher mit einer Vielzahl von im Wesentlichen horizontalen Be- und Entladeeinrichtungen zur gleichzeitigen Einschichtung und/oder Entnahme eines Wärmeträgerfluids auf. Dabei kann jede Be-und Entladeeinrichtung über zumindest eine Zuführleitung mit Wärmeträgerfluid beschickt werden und zwei oder mehrere Zuführleitungen miteinander fluidisch gekoppelt werden. Erfindungsgemäß sind die Zuführleitungen mit einem oder mehreren Adsorber(n) fluidisch gekoppelt.

Die Adsorber und die damit verbundene Komponenten können dabei in Adsorptionsmodulen einzeln oder paarweise angeordnet sein. Ein Adsorptionsmodul kann alle Komponenten oder auch nur einen bestimmten Teil umfassen.

Ein Wärmeträgerfluid im Sinne der Erfindung dient zum Wärmeaustausch zwischen dem oder den Adsorptionsmodul (en), d.h. zwischen den Adsorbern und dem Wärmespeicher, der eben teilweise oder vollständig mit dem Wärmeträgerfluid befüllt werden kann. Besonders bevorzugt kann die Erfindung vorsehen, dass das Wärmeträgerfluid Wasser ist. Es sind jedoch auch andere Fluide denkbar.

"Fluidisch gekoppelt" heißt im Sinne der Erfindung, dass die Komponenten untereinander über einen Kreislauf des Wärmeträgerfluids und nicht über einen Kreislauf des Arbeitsmitteldampfes, wie es im Stand der Technik der Fall ist, verbunden sind.

Vorteilhaft können eine oder mehrere Be-und Entladeeinrichtungen gleichzeitig mit Wärmeträgerfluid beschickt werden und die Adsorbermodule mit dem Wärmespeicher in geschickter Weise verschalten. Die Be-und Entladeeinrichtungen können dann nicht nur für den Adsorberkreis, sondern für mehrere Fluidkreise gemeinsam verwendet werden. Dabei kann zeitweise eine Superposition von Volumenströmen in einzelne Ladeeinrichtungen hinein oder aus ihnen heraus auftreten. In dem Speicher können sich mindestens drei Temperaturniveaus bilden, die mit drei hydraulischen Kreisen übereinstimmen - so im Falle einer Kältemaschine ein Antriebswärmekreis, ein Rückkühlungskreis und ein Adsorberkreis. Dadurch, dass jede Be- und Entladeeinrichtung über eine oder mehrere Zuführleitung(en) mit Wärmeträgerfluid beschickt werden kann bzw. zwei oder mehrere Zuführleitungen miteinander fluidisch gekoppelt sein können, ist eine gleichzeitige Beladung und Entnahme in bzw. aus dem Speicher möglich. Eine solche Superposition von Volumenströmen hat auf die Schichtung im Speicher und die erreichbare Effizienz der Adsorptionskältemaschine bzw. ihre Arbeitszahl keinen signifikanten Einfluss. Es muss nicht für jeden Fluidkreis eine eigene Be- und Entladeeinrichtung vorgesehen werden, da der maximale Volumenstrom, immer noch genügend klein ist, um eine gute Temperaturschichtung im Speicher aufrechtzuerhalten.

Bevorzugt kann die Erfindung vorsehen, dass die Anordnung ein Adsorptionsmodul mit zwei Adsorbern oder zwei Adsorptionsmodule mit jeweils einem Adsorber aufweist. Hierdurch kann eine mehrstufige Wärmetransformationsanordnung aufgebaut werden, die einen zentralen Wärmespeicher aufweist. Vorteilhaft kann mit der vorgestellten Anordnung eine Kombination der Funktionen "Heizen" und Kühlen" erreicht werden, wobei die unterschiedlichen Temperaturhübe (zwischen Verdampfer- und Kondensatortemperatur), die notwendig sind, um zu Heizen oder zu Kühlen, durch die gleiche Anordnung effizient bereitgestellt werden können.

Ferner können die Adsorber über das System aus Zuführleitungen und zwei oder mehreren Selektionsventilen für einen Vor- und Rücklauf des Wärmeträgerfluids mit dem Wärmespeicher verbunden werden. Dabei kann es sich um sogenannte Multiport-Selektionsventile handeln, die es ermöglichen einen Anschluss auf bis zu sechs Zuführleitungen oder sogar mehr zu verteilen. Hierbei kommt es nur darauf an, dass für jeden Adsorbervor- und -rücklauf je eine Be- bzw. Entladeeinrichtung ausgewählt werden kann. Dies lässt sich natürlich auch mit lauter einzelnen Ventilen (auf/zu) statt der Multiport-Ventile erreichen. Jeder Ausgang oder Port jedes Selektionsventils kann dabei jeweils mit einer Be- und Entladeeinrichtung des Wärmespeichers verbunden sein. Diese Ventile sind leicht zu nutzen und sind zudem platzsparend. Erfindungsgemäß können jedoch auch andere aus dem Stand der Technik bekannte Ventiltypen eingesetzt werden, um die Funktion zu erfüllen, dass für jeden Adsorberkreis zu jedem Zeitpunkt des Zyklus jeweils eine der Be- und Entladeeinrichtungen für die Fluidentnahme und eine andere für die Wiedereinschichtung des Fluids in den Speicher auswählbar ist.

Erfindungsgemäß kann das Adsorptionsmodul von dem Wärmespeicher über Ventile bzw. Sperrventil hydraulisch verbunden oder entkoppelt werden. Solche Sperrventile können bspw. 3/2-Wegeventile sein. Damit bildet jedes Adsorptionsmodul einen für sich geschlossenen hydraulischen Kreislauf. Bei mindestens einem der Adsorptionsmodule kann eine Wärmequelle in den Adsorberkreis integriert werden und während des Betriebs dieser Wärmequelle hydraulisch vom Speicher getrennt werden. Es kann damit eine hydraulische Umschaltung erfolgen, die neben dem Adsorber auch die Wärmequelle vom Speicher temporär hydraulisch entkoppelt und sie unter Umgehung des Speichers stattdessen mit dem Adsorber verbindet, der während des Betriebs die höchste Desorptionstemperatur erfordert. Vorteilhaft ist insbesondere, dass bei Wärmeträgerfluiden mit hohem Dampfdruck (wie z.B. Wasser) trotz hoher Antriebstemperaturen kein spezieller Druckspeicher notwendig ist. Die Abkopplung des Kreislaufs eines Adsorbers ist daher insbesondere für Wasser als Wärmeträgermedium relevant, da hier die bekannte Druckproblematik auftritt.

In einer Weiterbildung der Erfindung kann auch vorgesehen sein, dass das Adsorptionsmodul nur einen Adsorber aufweist, der ebenfalls die oben genannten Komponenten (wie Pumpe usw.) aufweist. Vorteilhaft können die Adsorber unabhängig voneinander mit jeweils einem eigenen hydraulischen Kreislauf und einer eigenen Pumpe für das Wärmeträgerfluid an den Wärmespeicher angeschlossen werden. Dies gestaltet die Anordnung äußerst einfach, da ein zentraler Wärmespeicher vorgesehen ist. Ebenso braucht die Wärmequelle für die Desorptionswärme, die nicht aus der Adsorptionswärme eines der Adsorber bereit gestellt werden soll, nicht in jeden Adsorberkreis einzeln integriert zu werden, sondern kann zentral am Wärmespeicher für alle Adsorbermodule angeordnet sein. Dies kann insbesondere dazu genutzt werden, wenn ein Wärmeträgerfluid mit einem geringeren Dampfdruck verwendet wird, wie z.B. Thermoöl.

Vorteilhaft kann somit aus der Wärmetransformationsanordnung eine mehrstufige Anordnung aufgebaut werden, wobei ein zweistufiger Betrieb bspw. als Gaswärmepumpe und ein einstufiger Betrieb bspw. als solarthermisch betriebene Kältemaschine verwendet werden kann. Vorteilhaft kann die Arbeitszahl und Leistung verbessert werden sowie ein einfacher, modularer Aufbau erreicht werden. Der Vorteil der Mehrstufigkeit der Wärmetransformationsanordnung kann auf die Art der Integration des Schichtspeichers zurückgeführt werden, an den jeder Adsorber mit einem eigenen hydraulischen Kreis und einer eigenen Pumpe angeschlossen sein kann. Mit der erfindungsgemäßen Anordnung und einer geschickten Ansteuerung der Be- und Entladeeinrichtung für jeden Adsorber kann dafür gesorgt werden, dass sich die mehrstufige Wärmenutzung aufgrund der sich einstellenden Temperaturschichtung im Speicher quasi von selbst ergibt, gerade auch wegen der einfachen hydraulischen Verschaltung der Adsorber untereinander.

Die Erfindung kann ferner vorsehen, dass jedes Adsorptionsmodul zumindest zwei Adsorberkammern für die Adsorber und zumindest ein Dampfventil hat, das zwischen den beiden Adsorberkammern angeordnet ist, so dass die Adsorberkammern dampfseitig miteinander verbunden werden können. Dies kann für eine sogenannte "mass recovery" verwendet werden. In geöffneter Stellung kann das Druckventil einen Druckausgleich zwischen beiden Kammern erreichen, wobei einer der Adsorber adsorbiert und der andere desorbiert wird. Der Hochtemperatur-Adsorber kann somit vorgekühlt werden, wobei während des Betriebs eine Antriebswärmequelle abgeschaltet und das Fluid durch den Kreislauf des Hochtemperatur-Adsorber zirkuliert werden kann. Das Dampfventil kann zwischen den Adsorbern solange geöffnet bleiben, bis ein Sättigungsdampfdruck unterhalb eines Drucks eines Speicherkreises liegt. Die "mass recovery" kann dazu beitragen, die Leistung der Anordnung deutlich zu steigern, indem eine notwendige Nachlaufzeit der Pumpe verkürzt werden kann, da durch die "mass recovery" dem Hochtemperatur-Adsorber durch Desorption wieder Wärme entzogen wird. Während der "mass recovery" und geöffnetem Druckventil kann vorgesehen sein, dass der Niedertemperatur-Adsorber weiterhin mit kaltem Wärmeträgerfluid durchströmt wird. Dadurch kann die Arbeitszahl noch weiter erhöht werden. Eine solche Synchronisation ist insbesondere für den Druckausgleich bei Nutzung von Wasser als Wärmeträgerfluid sinnvoll.

Die Wärmetransformationsanordnung kann so betrieben werden, dass ein Adsorberpaar mit derselben Periodendauer des Adsorptions-/Desorptionszyklus betrieben wird. Dazu kann jeder Adsorber während seiner Adsorptionsphasen nacheinander mit immer kälter werdendem Fluid aus dem Speicher beaufschlagt werden, was einer abnehmenden Entnahmehöhe des Speichers entspricht, und während seiner Desorptionsphasen nacheinander mit immer wärmer werdenden Fluid aus dem Speicher beaufschlagt werden, was einer zunehmenden Entnahmehöhe entspricht. Dabei kann einer der Adsorber nach Erreichen der höchsten Entnahmehöhe im Speicher von diesem abgekoppelt werden und mit der Wärmequelle weiter betrieben werden, um den Adsorber weiter zu desorbieren. Bei der maximalen gewünschten Desorptionstemperatur des mit der Wärmequelle verbundenen Adsorbers kann die Wärmequelle abgeschaltet bzw. hydraulisch abgekoppelt und das Ventil zum Druckausgleich zwischen den beiden Adsorberkammern geöffnet werden.

In einer weiteren Ausführungsform der erfindungsgemäßen Wärmetransformationsanordnung kann vorgesehen sein, dass Kondensator und Verdampfer nicht voneinander getrennt, sondern als ein Bauteil ausgeführt sind. Bei zwei getrennt voneinander arbeitenden Adsorptionsmodulen mit nur je einem Adsorber können Kondensator und Verdampfer jedes der Adsorptionsmodule als ein integrierter Wärmeübertrager ausgestaltet sein, wobei über externe Ventile zwischen den beiden hydraulischen Kreisen umgeschaltet wird. Diese Ausführung ist sinnvoll für einfache Gaswärmepumpen und simple Kältemaschinen.

Um bei thermischer Ausdehnung des Fluids innerhalb des Wärmespeichers von mehr als 50 K eine Druckbegrenzung zu ermöglichen, kann der Wärmespeicher an einem unteren Abschnitt ein Ausgleichsgefäß mit einer Membran aufweisen, so dass das unter Druck stehende Fluid in dieses Ausgleichsgefäß fließen kann. Das Ausdehnungsgefäß kann als sogenanntes Membranausdehnungsgefäß (MAG) ausgeführt und an den unteren Bereich des Speichers angeschlossen werden. Es kann auch in den Speicher integriert sein.

Es kann bevorzugt vorgesehen sein, dass zwei Adsorber mit verschiedenen Adsorptionsmaterialien vorhanden sind, wobei ein Adsorber für eine höhere Desorptionstemperatur ausgelegt ist (Hochtemperatur-Adsorber) als ein anderer Adsorber (Niedertemperatur-Adsorber), und unter typischen Temperaturbedingungen mindestens eines Anwendungsfalls der Wärmetransformationsanordnung ein Teil der Adsorptionswärme des Hochtemperatur-Adsorbers in einem für die Desorption des Niedertemperatur-Adsorbers nutzbaren Temperaturbereich anfällt. Dabei können als Adsorptionsmaterialien für Wasser als Arbeitsmittel ein Silikagel oder auch ein zeolithartiges Material, bevorzugt ein Aluminophosphat verwendet werden. Dabei kann insbesondere der Hochtemperatur-Adsorber einen Y-Zeolithen als Sorptionsmaterial enthalten und der Niedertemperatur-Adsorber das Silikagel oder das weniger hydrophile zeolithartige Material aufweisen. Der Niedertemperatur-Adsorber kann z.B. auch metallorganische Gerüstmaterialien (MOFs) oder hydrophilierte Aktivkohlen enthalten. Im Falle getrennter Adsorptionsmodule können auch verschiedene Arbeitsmittel eingesetzt werden, beispielsweise Wasser im Hochtemperatur-Adsorptionsmodul und Methanol im Niedertemperatur-Modul (z.B. mit Aktivkohle als Adsorptionsmaterial).

In einer bevorzugten Weiterbildung der Erfindung kann der Wärmespeicher ein thermisch geschichteter Wärmespeicher sein, der einen oder mehrere Speicherbehälter für ein Wärmeträgerfluid aufweist, in dem die Vielzahl von Be- und Entladeeinrichtungen zur gleichzeitigen Einschichtung und/oder Entnahme eines Wärmeträgerfluids angeordnet sein können. Es können mit den Be- und Entladeeinrichtungen, wie schon beschrieben, zwei oder mehr Wärmefluidströme verschiedener Temperatur gleichzeitig in verschiedene Schichten eingespeichert oder entnommen werden. Bevorzugt können die Be- und Entladeeinrichtungen des Wärmespeichers horizontal übereinander angeordnet sein, und so ausgebildet sein, dass eine Richardsonzahl Ri des Wärmespeichers in einem Bereich von 100 bis 3000 erreicht werden kann. Dabei ist der Schichtspeicher erfindungsgemäß im Zentrum des zweistufigen Systems angeordnet, wodurch eine verbesserte Wärmerückgewinnung, d. h. eine höhere Arbeitszahl gegenüber bisherigen Systemen erreicht werden kann, bei gleichzeitig geringerem Aufwand in anlagentechnischem und regelungstechnischem Sinne.

Die für Vermischungseffekte bei der Einströmung in einen Schichtspeicher wichtigste Kennzahl ist die Richardson-Zahl Ri(Y. H. Zurigat et al. "Stratified Thermal Storage Tank Inlet Mixing Characterization", Applied Energy 30, 99-111 (1988)):

$$Ri = \frac{g \cdot \beta \cdot \Delta T \cdot l}{v^2}$$

Mit g der Erdbeschleunigung, dem thermischen Ausdehnungskoeffizienten β des Fluids, einer charakteristische Länge bzw. Höhe im Speicher 1, der Temperaturdifferenz ΔT, die über der charakteristischen Höhe l vorliegt, und v der (mittleren) Austrittsgeschwindigkeit des Fluids aus einer der Be- bzw. Entladeeinrichtungen in den Speicher hinein.

Die charakteristische Länge l kann erfindungsgemäß anstatt einer Höhe in dem Speicher auch mit dem vertikalen Abstand der horizontal im Speicher angeordneten Be- und Entladeeinrichtungen identifiziert werden, dann sei ΔT die Temperaturdifferenz zwischen den zu l gehörigen benachbarten Be- und Entladeeinrichtungen, die sich bei einer linearen Temperaturschichtung des Speicherbehälters zwischen der höchsten speicherbaren Desorptionstemperatur und der niedrigsten Adsorptionstemperatur des Systems einstellen würde. Die Einströmgeschwindigkeit v soll an der äußeren Oberfläche der Be- und Entladeeinrichtung für den größtmöglichen in der betrachteten Be- und Entladeeinrichtung auftretenden Volumenstrom bestimmt werden (ggf. bei Superposition mehrerer Fluidkreise). Die so berechnete Kennzahl Ri kann in der erfindungsgemäßen Ausführungsform des Speichers Werte von mindestens 100 annehmen, wobei Werte in einem oben genannten Bereich von mehr als 1000 möglich sind. Dies ist abhängig von den Abmessungen und der Dimensionierung des Speichers. So können bspw. bei kleinen Speichern mit ca. 500 Liter Volumen und kleinen Adsorptionskältemaschinen mit in etwa 5 kW Kälteleistung sehr große Ri-Werte von über 2000 erreicht werden. Bei größeren Speichern und Kälteleistungen nehmen die erreichbaren Ri-Werte ab (z.B. Ri ≈ 500 für einen Speicher mit 5 m$^3$ und eine Adsorptionskältemaschine mit 50 kW Kälteleistung). Angenommen wurde hier jeweils eine Be- und Entladeeinrichtung mit einer Austrittsfläche von ca. 50% des Speicherquerschnitts.

Um eine gute Einschichtung des Wärmeträgerfluids sowie temperaturnahe Entnahme zu erreichen, ist ferner vorgesehen, dass die Be- und Entladeeinrichtungen voneinander beabstandet entlang der Höhe, z.B. einer Längsachse, des Wärmespeichers angeordnet sind, wobei sich an jeder der Be- und Entladeeinrichtungen ein eigenes Temperaturniveau einstellen kann. Dieses schwingt sich auf mittleres Temperaturniveau nach und nach ein, wodurch sich eine horizontale Schicht an jeder Be-und Entladeeinrichtung einstellt, und der Wärmespeicher sich linear einschichtet.

Für horizontale Be- und Entladeeinrichtungen kann in der erfindungsgemäßen Anordnung der spezifische Volumenstrom hoch sein, gerade wenn zwei Fluidströme sich überlagern. Die Be-und Entladeeinrichtungen müssen dann nicht nur großräumige Vermischung im Speicher vermeiden versuchen, sondern auch kleinskalige Vermischungseffekte und den Eintrag turbulenter kinetischer Energie in den Speicher weitestgehend minimieren und eine Laminarisierung der Strömung erreichen. Dies kann durch eine starke Vergrößerung der Austrittsoberfläche, die in großen Ri-Werten resultiert, in Verbindung mit einem sehr großen Öffnungsanteil der äußeren Oberfläche der Be- und Entladeeinrichtung erreicht werden. Gerade bei größeren Wärmepumpensystemen ist die Rohrströmung im Adsorberkreis hochturbulent (typischerweise Ri > 1000). Es kann erreicht werden, dass diese Turbulenz vor dem Eintritt des Fluids in den Speicher minimiert bzw. nahezu vollständig abgebaut wird, um eine Erhöhung des kleinskaligen Wärmetransports infolge einer lokalen Vermischung aufgrund der turbulenten Strömung zu vermeiden.

Erfindungsgemäß sind die Be- und Entladeeinrichtungen des Wärmespeichers dazu abschnittsweise oder vollständig aus einem porösen Material. Dadurch kann eine effektive Dissipation der turbulenten kinetischen Energie erreicht werden.

"Porös" im Sinne der Erfindung meint, dass das Material Hohlräume aufweist, auch solche, die sich an die Oberfläche erstrecken, und die miteinander verbunden sind, so dass insgesamt eine große innere und äußere Oberfläche des Materials zur Verfügung steht. Das Verhältnis von Hohlraumvolumen zu Gesamtvolumen ist daher sehr groß. Je größer das Verhältnis, desto offenporiger ist das Material. Das Material kann auch schwammartig mit einer großen Innenfläche aufgebaut sein und Austrittsöffnungen haben, die klein gegenüber einer Gesamtoberfläche des Materials sind. Ein solches Material kann zum Beispiel ein retikulierter Polymerschaum, eine siebartige Struktur aus Kunststoff oder ein Edelstahldrahtnetz sein. Dabei kann die Oberfläche der Einströmung in den Speicher so weit vergrößert werden, so dass sie in der Größenordnung des Speicherquerschnitts liegt. Dies ermöglicht einen geregelten Durchfluss des Fluids durch die Be- und Entladeeinrichtungen in dem Sinne, dass das Fluid an diesen Stellen ohne Ausbildung lokaler Jets, die zur Vermischung mit dem bereits im Speicher befindlichen Fluid führen würden, sehr langsam austritt. Folglich werden nur kleinste Wirbel an der Austrittstelle erzeugt. Durch das langsame Austreten kann anstatt einer Vermischung eher eine Verdrängung des Speicherfluids erreicht werden, wodurch sich das einströmende Fluid dort einschichten kann, wo es in den Speicher geleitet wird. Aufgrund einer verminderten thermischen Vermischung im Speicher kann eine geringere Entropieproduktion erreicht werden.

Durch die Ausgestaltung der Be- und Entladeeinrichtungen in Form von Schichtladeringen (Tori) kann insbesondere im Fall zylindrischer Speicherbehälter vorteilhaft erreicht werden, dass auch bei sehr hohen Volumenströmen eine laminare, fast ideale Pfropfenströmung im Wärmespeicher entstehen kann. Hiermit kann eine kollektive Vermischung des Speicherinhalts minimiert werden. Durch die gleichmäßige Verteilung des einzuschichtenden Fluids über eine große Fläche kann die Geschwindigkeit der Strömung abgesenkt werden. Eine für die Einströmung charakteristische Richardson-Zahl wird somit möglichst groß gehalten, so dass Trägheitskräfte gegenüber den wirkenden Auftriebskräften klein werden, wie oben beschrieben wurde.

In einer alternativen Ausführungsform können die Be- und Entladeeinrichtungen auch einen lanzenförmigen oder kreuzförmigen Hohlkörper aufweisen. Die Be- und Entladeeinrichtung können aus Metall bestehen, oder je nach Temperaturbereich des Speichers bzw. nach Anwendung aus fertigungstechnischen Gründen und Kostenüberlegungen können auch Kunststoffrohre zum Einsatz kommen. Somit kann für jede Anwendung eine optimale Einschichtung des Wärmeträgerfluids in den Wärmespeicher erreicht werden.

Ferner kann, um die Durchmischung und Verwirbelung zwischen den einzelnen Schichten so gering wie nur möglich zu halten, ein oder mehrere poröse Zwischenböden (bzw. Sieb- oder Netzstrukturen) zur Begünstigung einer gleichförmigen Pfropfenströmung zwischen benachbarten Be- und Entladeeinrichtungen im Speicherbehälter vorgesehen sein.

Um die oben genannte Richardsonzahl zu erreichen, sieht die Erfindung weiterhin vor, dass die sich aus allen Fluid-Austrittsöffnungen jeder der Be- und Entladeeinrichtungen ergebende Fluid-Austrittsfläche in Bezug zu einer horizontalen Querschnittsfläche des Wärmespeichers in einem Bereich von 10 % bis 50%, bevorzugt von zumindest 15 % liegen kann. Dies kann für einen zylindrischen Speicherbehälter z.B. erreicht werden, indem ein großvolumiges, perforiertes Einströmrohr zu einem Ring (Torus) gebogen wird, der normal zu einer Längsachse im Speicher liegt und mit dem porösen Material umgeben ist. Die Geschwindigkeit der Einströmung liegt dann in der Größenordnung der Geschwindigkeit der durch die äußeren Fluidkreise verursachten Pfropfenströmungen im Speicher, die typischerweise nur einige Millimeter pro Sekunde beträgt. Somit werden die Trägheitskräfte gegenüber dem Auftrieb vernachlässigbar und die thermische Schichtung auch bei hohen Volumenströmen gut erhalten. Indem der Austrittsquerschnitt im Vergleich zum Stand der Technik vergrößert wird, kann die Einströmgeschwindigkeit stark herabgesenkt werden. Es kann vorkommen, dass die Fluid-Eintrittstemperatur an der Be- und Entladeeinrichtung nicht genau zur Speichertemperatur in dieser Höhe passt. Hier kann sich ein Fluidschleier zwischen der Be- und Entladeeinrichtung und der "richtigen" Höhe, die mit der entsprechenden Temperatur korreliert, im Speicher ausbilden. Jedoch kann dieser Fluidschleier einen vermischungsarmen Transport des Fluids zu seiner thermisch passenden Schicht zeigen, eben aufgrund der hohen Richardsonzahl und der vorliegenden nahezu idealen linearen Schichtung.

Vorteilhaft können die Beladeeinrichtungen für einen in der Regel nur kurzzeitig auftretenden Extremfall der Überlagerung der Volumenströme ausgebildet sein und so in allen Teilphasen des Zyklus eine stabile Pfropfenströmung im Tank erzeugen.

Die Erfindung sieht in einer Weiterbildung vor, dass die Wärmetransformationsanordnung für einen Heizkreislauf eine Antriebswärmequelle, insbesondere einen Brenner, aufweist, wobei das Adsorptionsmodul, das einen Hochtemperatur-Adsorber aufweist, über ein 3/2-Wegeventil fluidisch mit der Antriebswärmequelle verbunden werden kann.

Die Wärmetransformationsanordnung kann ferner für den Kühlfall eine Wärmesenke umfassen, die mit dem Wärmespeicher fluidisch verbunden werden kann. Für den Heizfall kann der Verdampfer über eine Pumpe mit einer Niedertemperatur-Wärmequelle wie z.B. einer Erdsonde fluidisch verbunden sein.

Um die Anordnung automatisch steuern zu können, können eine oder mehrere Regel- und Steuerungseinheit(en) sowie eine damit verbundene Datenverarbeitungseinheit vorgesehen sein. Auch kann eine Vielzahl an Sensoren in der Anordnung eingebaut sein, die unterschiedlichen Temperaturen, Drücke, etc. in der Anordnung überwacht.

Die Betriebsparameter und die Komponenten der Wärmetransformationsanordnung können beispielhaft wie folgt eingestellt bzw. eingesetzt werden: Bei Wasser als Wärmeträgerfluid kann als maximale Desorptionstemperatur 150 °C angenommen werden. Der Hochtemperatur-Adsorber kann einen Y-Zeolithen als Sorptionsmaterial und der Niedertemperatur-Adsorber ein weniger hydrophiles Material wie z.B. SAPO-34 enthalten. Zu Beginn eines Zyklus kann der Speicher linear zwischen 30 °C unten (Rücklauftemperatur des Heizsystems) und 95 °C oben geschichtet sein. Der Hochtemperatur-Adsorber hat seinen maximal adsorbierten Zustand bei 50°C, der Niedertemperatur-Adsorber liegt maximal im desorbierten Zustand bei 95 °C.

Aus dem Speicherbehälter wird nun gleichzeitig Wärmeträgerfluid für beide Adsorber entnommen. Der Niedertemperatur-Adsorber wird schrittweise abgekühlt, wobei das zugehörige Ventil zu dem Kreislauf des Niedertemperatur-Adsorbers in einer Stellung ist, so dass ein erstes Selektionsventil im Vorlauf und ein zweites Selektionsventil im Rücklauf des Adsorbers befindet, wobei eine Einspeisung des Fluids in den Wärmespeicher jeweils eine Position höher als die Entnahme erfolgt, wie es auch aus dem Stand der Technik bekannt ist. Der Hochtemperatur-Adsorber wird aus dem Speicherbehälter aufgeheizt, wobei über das zugehörige Ventil im Kreislauf sich ein drittes Selektionsventil im Vorlauf und ein viertes Selektionsventil im Rücklauf befindet, so dass eine Einspeisung jeweils eine Position tiefer als eine Entnahme erfolgt. Da die Entnahmehöhe des adsorbierenden Adsorbers nach unten durchgereicht wird, und die des desorbierenden Adsorbers nach oben, sind bei der Überlagerung der Volumenströme, wenn sich die Entnahmen und Einrichtungen treffen, verschiedene Fälle möglich:

Es kann eine Entnahme beider Adsorber aus derselben Höhe erfolgen. Da die Einschichtung beider Adsorber in unterschiedlichen Höhen erfolgt, sind somit nur wenige zusätzliche Mischeffekte zu erwarten. Gleiches gilt bei gleichem Volumenstrom beider Adsorber, wobei ein Adsorber dorthin einspeist, wo der andere gerade entnimmt. Hierbei ergibt sich ein hydraulischer Kurzschluss innerhalb der jeweiligen Be-und Entladeeinrichtung oder in den Zuführleitungen außerhalb des Wärmespeichers. Ferner kann auch der Fall eintreten, dass Fluid aus beiden Adsorbern in derselben Höhe eingespeist werden kann, wobei unvermeidlich eine thermische Vermischung der beiden Ströme in der Ladeeinrichtung auftritt. Ein thermodynamisches Mischungsverhältnis, d.h. eine Entropieerzeugung aufgrund Vermischung von Fluid unterschiedlicher Temperatur kann relativ klein bleiben, wenn die Temperaturen der beiden Fluidströme sich nicht stark unterscheiden.

Der Hochtemperatur-Adsorber kann dabei über seinen gesamten Zyklus eine größere Temperaturspreizung, beispielsweise 100 K Temperaturunterschied gegenüber 65 K für den Niedertemperatur-Adsorber durchlaufen. Bei gleicher Zyklenlänge ist die Temperaturänderung des Hochtemperatur-Adsorbers stets schneller als die des Niedertemperatur-Adsorbers. Dies bedeutet, dass der Hochtemperatur-Adsorber seine Desorptionsstufen im Speicher schneller durchläuft als der Niedertemperatur-Adsorber seine Adsorptionsstufen. Dies sieht im Verhältnis zum Speicherbehälter so aus, dass dann der Hochtemperatur-Adsorber bereits an der höchsten Entnahmestelle angelangt ist, bevor der Niedertemperatur-Adsorber bei der niedrigsten angelangt ist. Kann der Hochtemperatur-Adsorber aus dem Speicher nicht weiter desorbieren, so kann er über die Sperrventile hydraulisch vom Speicher getrennt und mit der Wärmequelle verbunden werden. Der Brenner kann eingeschaltet werden und der Hochtemperatur-Adsorber bis zum Erreichen der festgelegten Höchsttemperatur desorbieren.

Der Niedertemperatur-Adsorber wird währenddessen weiter aus dem Speicher gekühlt und adsorbiert, bis zur Entnahme aus dem untersten Schichtladering. Das Ende der Desorption des Hochtemperatur-Adsorbers ist der Zeitpunkt, an dem sich die Teilprozesse synchronisieren. Der Kreislauf des Hochtemperatur-Adsorbers inklusive Wärmetauscher ist nun auf maximaler Temperatur. Bei Öffnen der Sperrventile würde es zu einer Dampfbildung im Wärmeträgerkreis kommen. Der Adsorber muss daher zunächst vorgekühlt werden, was erfindungsgemäß durch die oben beschriebene "mass recovery" erreicht wird. Dazu wird der Brenner abgeschaltet und das Fluid im Adsorberkreis zwischen Wärmetauscher und Adsorber durch die Pumpe weiter zirkuliert. Da der Hochtemperatur-Adsorber aber nicht mehr über den Brenner beheizt wird, muss die Desorptionswärme aus der sensiblen Wärme der Komponenten aufgebracht werden, wodurch sich die Temperatur im Kreislauf des Hochtemperatur-Adsorbers senkt. Sobald die Temperatur des Kreislaufs soweit gesunken ist, dass der Sättigungsdampfdruck wieder unterhalb des Drucks im Speicherkreis liegt, kann der Hochtemperatur-Adsorber wieder mit dem Speicher verbunden werden. Der Halbzyklus ist damit beendet und das Dampfventil kann geschlossen werden. Die Strömungsrichtung in beiden Kreisen kann nun über die Ventile in den Adsorberkreisläufen umgekehrt werden. Der nachfolgende Halbzyklus verläuft analog zu dem oben beschriebenen, jedoch ohne "mass recovery", da der Hochtemperatur-Adsorber zu diesem Zeitpunkt keine kritische Temperatur hat. Zur Leistungssteigerung und zur Erhöhung der Arbeitszahl kann in bestimmten Fällen trotzdem eine "mass recovery" durchgeführt werden. Vorteilhaft ist bei der vorbeschriebenen Anordnung die Nachlaufphase wesentlich verkürzt, was die Leistung der Gesamtanlage signifikant erhöhen kann.

Erfindungsgemäß kann ein Verfahren zur Leistungserhöhung einer vorbeschriebenen Wärmetransformationsanordnung vorgesehen sein, wobei ein Adsorber von dem Speicher entkoppelt wird und eine Desorption mindestens eines vom Speicher entkoppelbaren Adsorbers zumindest zeitweise mittels der im vom Speicher entkoppelten Fluidkreis integrierten Wärmequelle erfolgt. Ferner kann nach Ende der Desorption des entkoppelten Adsorbers und nach Abschalten der Wärmezufuhr eine Abkühlung dieses Adsorbers durch Öffnen des Dampfventils zwischen den beiden Adsorbern und eine Desorption mit Dampfmassenstrom in eine andere Adsorberkammer erfolgen. Durch diese "mass recovery" kann die Leistung der Wärmetransformation erhöht werden, indem die Phase der isosteren Abkühlung des entkoppelten Adsorbers verkürzt wird.

Weitere Ausführungsformen sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Die Figuren sind lediglich eine schematische Darstellung einer Ausführungsform der Erfindung.

Dabei zeigen:

> **Fig.1** eine schematische Ansicht einer erfindungsgemäßen Wärmetransformationsanordnung, und
> **Fig.2** eine Detailansicht einer Be- und Entladeeinrichtung des Wärmespeichers.

Die erfindungsgemäße Vorrichtung ist eine Wärmetransformationsanordnung mit einem thermisch geschichteten Wärmespeicher.

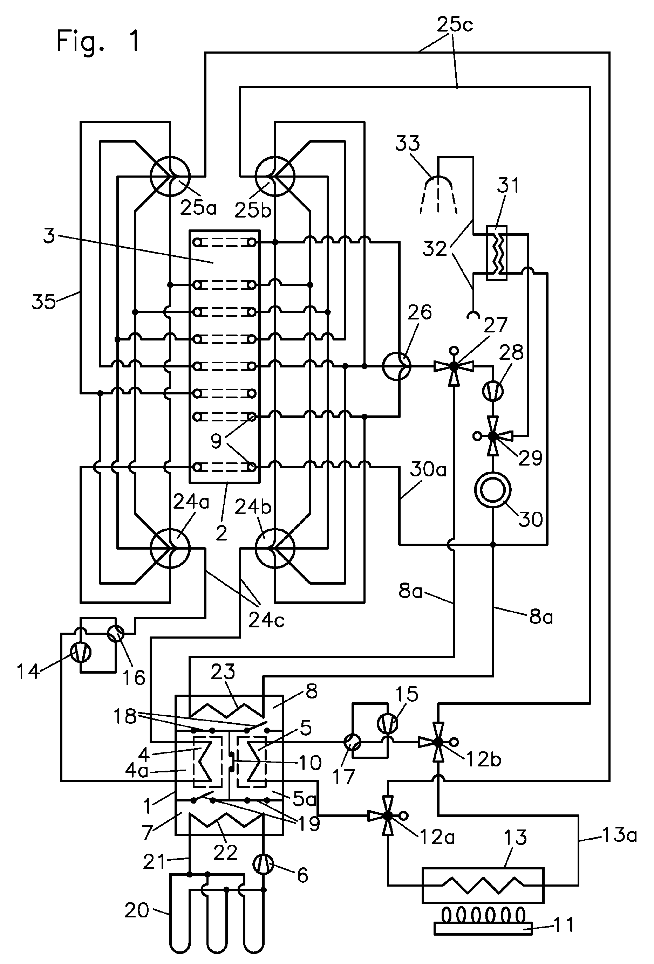

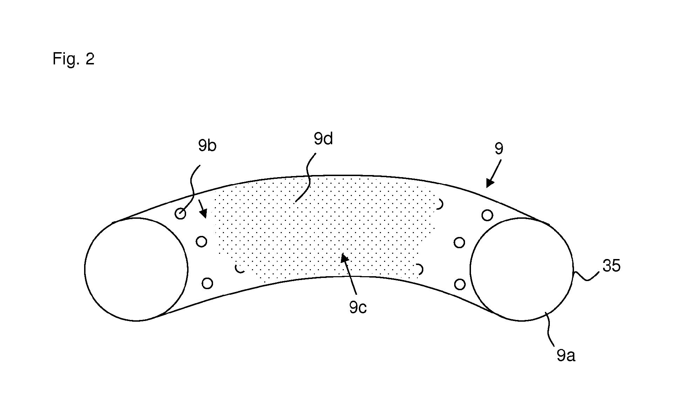

In **Fig.1** ist eine solche Wärmetransformationsanordnung abgebildet, die ein Adsorptionsmodul **1** sowie einen damit hydraulisch verbundenen Wärmespeicher **2** aufweist. Der Wärmespeicher **2** ist ein thermisch geschichteter Speicher, mit einem zylindrischen Speicherbehälter **3**. Der Speicherbehälter **3** weist eine Vielzahl von Be- und Entladeeinrichtungen **9** auf, die zur Einschichtung und Entnahme von Wärmeträgerfluid dienen. Hier sind acht verschiedene Be- und Entladeeinrichtungen **9** in verschiedenen Höhen des Wärmespeichers **2** vorgesehen, die ringförmig sind, wie auch **Fig.2** zeigt.

Die Be- und Entladeeinrichtungen **9** sind dabei aus einem Rohr **9a** aufgebaut. Das Rohr kann aus Metall oder aus Kunststoff gefertigt sein, je nach Anwendungsbedarf. Das Rohr **9a** hat Öffnungen **9b** und ist umgeben von einem porösen Material **9c**, das viele Poren aufweist. Die Poren haben jeweils eine Austrittöffnung, deren Fläche zusammengenommen eine Austrittsfläche **9d** bildet, durch die das Wärmeträgerfluid entweichen kann. Durch die große Oberfläche und die offenporige Struktur dieser Be- und Entladeeinrichtung **9** wird erreicht, dass auch bei großen Volumenströmen das Wärmeträgerfluid mit sehr geringen Strömungsgeschwindigkeiten in den Speicherbehälter **3** eingebracht wird und somit eine gute Schichtung stattfindet. Insbesondere können sogenannte Jets vermieden werden, eine abschnittweise schnell fließenden Strömung, die sonst zu einer großräumigen Vermischung und einer erheblichen Störung der thermischen Schichtung innerhalb des Speicherbehälters **3** führen könnten.

Zur Entlastung bei hohen Drücken innerhalb des Speicherbehälters **3** ist in einem unteren Abschnitt der Speicherbehälters **3** ein Ausgleichsgefäß **3a** mit einer Membran (figurativ nicht dargestellt) vorgesehen, die den Speicherbehälter **3** mit einem Ausgleichsgefäß **3a** verbindet. Das Gefäß **3a** kann bei einem Druckanstieg überschüssiges Wärmeträgerfluid aufnehmen und die gesamte Wärmetransformationsanordnung daher vor statischem Überdruck bei hohen Temperaturen im Speicher schützen.

Das Adsorptionsmodul **1** umfasst innerhalb von Adsorberkammern **4a**, **5a** jeweils Adsorber **4**, dabei in Adsorberkammer **4a** ein Niedertemperatur-Adsorber **4** sowie entsprechend in der Adsorberkammer **5a** ein Hochtemperatur-Adsorber **5**.

Ferner ist eine Verdampferkammer **7** mit einem Verdampfer-Wärmetauscher **22** vorgesehen, der über einen hydraulischen Kreislauf **21** mittels einer Pumpe **6** mit einer Niedertemperatur-Wärmequelle, einer Erdsonde **20** als Wärmequelle verbunden ist. Die vorliegende Beschreibung gilt für den Heizfall, jedoch kann im Kühlfall die Erdsonde ggf. als Wärmesenke dienen.

Die Verdampferkammer **7** ist mit den Adsorberkammern **4a**, **5a** über Dampfventile **19** gekoppelt. Ferner ist ein Kondensator 8 vorgesehen, der über Dampfventile **18** mit den Adsorberkammern **4a**, **5a** gekoppelt werden kann. Dabei weist der Kondensator 8 ebenfalls einen Wärmetauscher **23** auf, der über weitere hydraulische Verbindungen **8a** über ein Dreiwege-Mischventil **27** und eine Pumpe **28** mit einer Wärmesenke **30** (bspw. einem Gebäude-Heizsystem) verbunden ist. Die Wärmesenke **30** ist ferner über ein Selektionsventil **26** und eine hydraulische Verbindung **30a** sowie das Dreiwege-Mischventil **27** mit dem Wärmespeicher **3** verbunden. Der durch die Pumpe **28** verursachte, in der Wärmesenke **30** abgekühlte Fluidstrom teilt sich also je nach Stellung des Ventils **27** zwischen dem Kondensatorkreis **8a** und dem Speicherkreis **30a** auf, wobei die Entnahmehöhe aus dem Speicher durch die Stellung des Selektionsventils **26** festgelegt wird. Ferner kann über das Dreiwege-Mischventil **29** ein weiterer Wärmetauscher **31** als zusätzliche Wärmesenke beschickt werden, der Wärme an einen Brauchwasserkreislauf mit einer Brauchwasserleitung **32** und einer Brauchwasserentnahme **33**, bspw. eine Dusche, abgibt.

Der Hochtemperatur-Adsorber **5** kann über eine eigene Pumpe **15** mit dem Wärmeträgerfluid beschickt werden, wobei im Kreislauf **25c** ein Ventil **17** eingebaut ist, womit eine Durchflussrichtung zwischen Adsorptionsphase und Desorptionsphase umgekehrt werden kann. In dem Kreislauf des Hochtemperatur-Adsorbers **5** sind ferner zwei 3/2-Wegeventile **12a**, **12b** vorgesehen, die den Adsorber **5** alternativ entweder mit einer Antriebswärmequelle, hier ein Brenner **11** inklusive einem Wärmetauscher **13**, oder mit dem Wärmespeicher **2** verbinden. Die Besonderheit hierbei ist, dass mittels dieser Wege- bzw. Sperrventile **12a**, **12b** der Hochtemperatur-Adsorberkreis von dem Wärmespeicher **2** abgekoppelt werden kann, um am Ende einer Desorptionsphase des Hochtemperatur-Adsorbers **5** bei hoher Temperatur des Wärmeträgerfluids den Druck in diesem Teilkreis über den Druck im Speicherkreis hinaus erhöhen zu können. Zur Absicherung des Brennerkreislaufes **13a** können von dort ein Rückschlagventil sowie ein parallel geschaltetes Überstromventil (figurativ nicht dargestellt) zum Speicher-Rücklauf **30a** vorhanden sein, die erst bei höherem Druck als dem zur Vermeidung von Dampfbildung im Hochtemperatur-Adsorberkreislauf erforderlichen Druck öffnen. Dieses Überströmventil kompensiert dann genau die thermische Ausdehnung des Fluids in Kreislauf **13a** mit dem Hochtemperatur-Adsorber **5**.

Zwischen den Adsorberkammern **4a**, **5a** ist ein Dampfventil **10** vorgesehen, das einen Stoffaustausch zwischen beiden Adsorbern **4**, **5** am Ende eines Halbzyklus ermöglicht (so genannte "mass recovery").

Ein hydraulischer Kreislauf **24c** für den Niedertemperatur-Adsorber **4** ist ähnlich gestaltet wie der Kreislauf **25c** für den Hochtemperatur-Adsorber **5**. Auch der Niedertemperatur-Adsorber **4** ist mit einer eigenen Pumpe **14** sowie einem Ventil **16** fluidisch verbunden, das die Umkehrung der Flussrichtung des Fluids erreichen kann.

An den Speicherbehälter **3** sind die Adsorber **4**, **5** jeweils über Selektionsventile **24a**, **24b** sowie Selektionsventile **25a**, **25b** für den Vor- und Rücklauf angebunden. Die Selektionsventile sind Multiport-Selektionsventile. Die einzelnen Ausgänge der Ventile **24a**, **24b**, **25a**, **25b** sind jeweils mit einer Be-und Entladeeinrichtung **9** des Speicherbehälters **3** über Zuführleitungen **35** verbunden. Dabei dienen die Selektionsventile **24a**, **24b** der Anbindung des Niedertemperatur-Adsorbers **4** über die Verbindungsleitung **24c** sowie die Selektionsventile **25a**, **25b** der Anbindung des Hochtemperatur-Adsorbers **5** über die Verbindungsleitung **25c**.

Gemäß **Fig.1** weist der Speicherbehälter **3** über insgesamt acht Schichtladeringe **9** auf, von denen jeweils fünf in der **Fig. 1** von einem Multiportventil **24a**, **24b**, **25a**, **25b** selektiert werden können. Je nach Anwendung der Wärmetransformationsanordnung können hier sowohl alle Be- und Entladeeinrichtungen **9**, als auch nur einzelne der Be- und Entladeeinrichtungen **9** angesteuert werden. In der in **Fig. 1** gezeigten Ausführungsform sind die zusammengehörigen Vor- und Rückläufe jedes Adsorbers **4**, **5** jeweils um eine Höhenstufe versetzt geschaltet. Es kann also während einer Desorption des Hochtemperatur-Adsorbers **5** mittels Ventil **25b** Fluid aus dem obersten Schichtladering **9** entnommen werden und nach Durchlaufen des Adsorbers mittels Ventil **25a** in den nächsttieferen Ring **9** eingeschichtet werden. Während der Adsorption des Hochtemperatur-Adsorbers **5** wird Wärme in den oberen Teil des Speichers **2** eingeschichtet, die für die nächste Desorption des Niedertemperatur-Adsorbers **4** (über die Ventile **24a**, **24b**) nutzbar ist.

Je nach Anwendung der Wärmetransformationsanordnung können beide oder nur ein Adsorber **4**, **5** genutzt werden. Wenn im Betriebsmodus "Kühlung" z.B. ein thermischer Solarkollektor (figurativ nicht dargestellt) zur Beheizung des Speichers **2** verwendet wird, kann das Sorptionsmodul **1** nur unter Verwendung des Niedertemperatur-Adsorbers **4** laufen. Der Solarkollektor dient dann als Wärmequelle zur Desorption des Niedertemperatur-Adsorbers **4** (alternativ zur Adsorptionswärme des Hochtemperatur-Adsorbers **5** im Heizfall), und der Teilkreis des Adsorbers **5** ist nicht in Betrieb. In dieser Variabilität der Betriebsführung zeigt sich der Vorteil der erfindungsgemäßen Anordnung mit der unabhängigen Ankopplung der einzelnen Adsorber an den Schichtspeicher **2**.

**BEZUGSZEICHENLISTE**

| | |
|---|---|
| 1 | Adsorptionsmodul |
| 2 | Wärmespeicher |
| 3 | Speicherbehälter |
| 3a | Ausgleichsgefäß |
| 4 | Niedertemperatur-Adsorber |
| 4a | Adsorberkammer |
| 5 | Hochtemperatur -Adsorber |
| 5a | Adsorberkammer |
| 6 | Pumpe |
| 7 | Verdampfer |
| 8 | Kondensator |
| 8a | Verbindungsleitung (Kondensatorkreis) |
| 9 | Be- und Entladeeinrichtungen Wärmespeicher |
| 9a | Rohr |
| 9b | Öffnungen Rohr |
| 9c | Poröses Material |
| 9d | Fluid-Austrittsöffnungen |
| 10 | Dampfventil (aktiv schaltbar) |
| 11 | Antriebswärmequelle (Brenner) |
| 12a, 12b | 3/2-Wegeventile |
| 13 | Wärmeübertrager (Antriebswärmequelle) |
| 13a | Verbindungsleitung (Brennerkreis) |
| 14 | Pumpe Niedertemperatur-Adsorber |
| 15 | Pumpe Hochtemperatur-Adsorber |
| 16 | Ventil |
| 17 | Ventil |
| 18 | Dampfventil (passiv bei Druckdifferenz schaltend) |
| 19 | Dampfventil (passiv bei Druckdifferenz schaltend) |
| 20 | Erdsonde |
| 21 | Hydraulische Verbindung |
| 22 | Verdampfer-Wärmeübertrager |
| 23 | Kondensator-Wärmeübertrager |
| 24a, 24b | Multiport-Selektionsventile für Niedertemperatur-Adsorberkreis |
| 25a, 25b | Multiport-Selektionsventile für Hochtemperatur-Adsorberkreis |
| 26 | Selektionsventil |
| 27 | Dreiwege-Mischventil |
| 28 | Pumpe |
| 29 | Dreiwege-Mischventil |
| 30 | Wärmesenke (Heizkörper im Gebäude) |
| 30a | Verbindungsleitung (Wärmesenke - Speicher) |
| 31 | Wärmeübertrager (Frischwasserstation) |
| 32 | Brauchwasserleitung |
| 33 | Brauchwasserentnahme |
| 35 | Zuführleitungen (Schichtladeeinheiten - Selektionsventile) |

**Patentansprüche**

1. Adsorptive Wärmetransformationsanordnung mit

   a) zumindest zwei Adsorbern **(4, 5),** die mit zumindest einer Pumpe **(14, 15),** einem Verdampfer **(7)** und einem Kondensator **(8)** verbunden sind, und
   b) einem Wärmespeicher **(2)** mit einer Vielzahl von horizontalen Be- und Entladeeinrichtungen **(9)** zur gleichzeitigen Einschichtung und/oder Entnahme eines Wärmeträgerfluids,
   wobei
   c) jede Be-und Entladeeinrichtung **(9)** über zumindest eine Zuführleitung **(35)** mit Wärmeträgerfluid beschickbar ist und
   d) zwei oder mehrere Zuführleitungen **(35)** miteinander fluidisch gekoppelt und mit zumindest einem Adsorptionsmodul **(1)** fluidisch gekoppelt sind.

2. Wärmetransformationsanordnung nach Anspruch 1, **dadurch gekennzeichnet, dass** die Anordnung ein Adsorptionsmodul **(1)** mit jeweils zwei Adsorbern **(4, 5)** oder zwei Adsorptionsmodule **(1)** mit jeweils einem Adsorber **(4, 5)** aufweist.

3. Wärmetransformationsanordnung nach Anspruch 1 oder 2, **dadurch gekennzeichnet, dass** zumindest zwei der Adsorber **(4, 5)** über zumindest zwei Selektionsventile **(24a, 24b, 25a, 25b)** für einen Vor- und Rücklauf des Wärmeträgerfluids mit dem Wärmespeicher **(2)** verbindbar ist, wobei jeder Port des Selektionsventils **(24a, 24b, 25a, 25b)** jeweils mit einer Be- und Entladeeinrichtung **(9)** des Wärmespeichers **(2)** verbunden ist.

4. Wärmetransformationsanordnung nach zumindest einem der Ansprüche 2 oder 3, **dadurch gekennzeichnet, dass** mindestens ein Adsorptionsmodul **(1)** zumindest zwei Adsorberkammern **(4a, 4b)** für die Adsorber **(4, 5)** und zumindest ein Dampfventil **(10)** hat, das zwischen den zwei Adsorberkammern **(4a, 4b)** angeordnet ist, so dass die Adsorberkammern **(4a, 4b)** dampfseitig miteinander verbindbar sind.

5. Wärmetransformationsanordnung nach zumindest einem der Ansprüche 1 bis 4, **dadurch gekennzeichnet, dass** der Adsorber ein Niedertemperatur-Adsorber **(4)** oder ein Hochtemperatur-Adsorber **(5)** ist, und/oder dass ein Adsorptionsmaterial ein Silikagel oder ein zeolithartiges Material, bevorzugt Aluminophosphat ist.

6. Wärmetransformationsanordnung nach zumindest einem der Ansprüche 1 bis 5, **dadurch gekennzeichnet, dass** zumindest ein Adsorber **(4, 5)** von dem Wärmespeicher **(2)** über Sperrventile **(12a, 12b)**, fluidisch verbindbar oder entkoppelbar ist.

7. Wärmetransformationsanordnung nach zumindest einem der Ansprüche 1 bis 6, **dadurch gekennzeichnet, dass** der Wärmespeicher **(2)** ein thermisch geschichteter Wärmespeicher **(2)** ist, der zumindest einen Speicherbehälter **(3)** für ein Wärmeträgerfluid aufweist, in dem die Vielzahl von Be- und Entladeeinrichtungen **(9)** zur gleichzeitigen Einschichtung und/oder Entnahme eines Wärmeträgerfluids angeordnet sind, und wobei

die Be- und Entladeeinrichtungen **(9)** des Wärmespeichers **(2)** horizontal übereinander angeordnet sind und so ausgebildet sind, dass eine Richardsonzahl (Ri) des Wärmespeichers **(2)** in einem Bereich von 100 bis 3000 erreichbar ist.

8. Wärmetransformationsanordnung nach Anspruch 7, **dadurch gekennzeichnet, dass** jede Be- und Entladeeinrichtung **(9)**

> e) zumindest abschnittsweise ein poröses Material aufweist und/oder
> f) ein ringförmiger oder lanzenförmiger oder kreuzförmiger Hohlkörper ist, und/oder
> g) zumindest einen porösen Zwischenboden zur teilweise fluiden Abtrennung von benachbarten Be- und Entladeeinrichtungen **(9)** aufweist.

9. Wärmetransformationsanordnung nach Anspruch 7 oder 8, **dadurch gekennzeichnet, dass** die sich aus allen Fluid-Austrittsöffnungen **(9d)** jeder der Be- und Entladeeinrichtungen **(9)** ergebende Fluid-Austrittsfläche in Bezug zu einer horizontalen Querschnittsfläche des Wärmespeichers **(2)** in einem Bereich von 10 % bis 50%, bevorzugt von zumindest 15 % liegt.

10. Wärmetransformationsanordnung nach zumindest einem der Ansprüche 7 bis 9, **dadurch gekennzeichnet, dass** die Be- und Entladeeinrichtungen **(9)** voneinander beabstandet entlang der Höhe des Wärmespeicher **(2)** angeordnet sind, wobei sich an jeder der Be- und Entladeeinrichtungen **(9)** ein Temperaturniveau einstellt.

# Fig. 1

Fig. 2

Europäisches
Patentamt

European
Patent Office

Office européen
des brevets

## EUROPÄISCHER RECHERCHENBERICHT

**Nummer der Anmeldung**

EP 15 40 1097

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 20 2013 008465 U1 (BOSCH GMBH ROBERT [DE]) 15. Oktober 2013 (2013-10-15) * Absatz [0032] - Absatz [0084]; Abbildungen 1-10 * ----- | 1-10 | INV. F25B17/08 F24H9/12 F25B30/04 F24D11/02 |
| Y | AT 411 391 B (VAILLANT GMBH [AT]) 29. Dezember 2003 (2003-12-29) * Seite 2 - Seite 3; Abbildung 1 * ----- | 1-10 | F24D17/00 F24D17/02 F28D20/00 |
| A | EP 1 279 909 A2 (VAILLANT GMBH [DE]) 29. Januar 2003 (2003-01-29) * Absatz [0012] - Absatz [0020]; Abbildungen 1-3 * ----- | 1-10 | |

**RECHERCHIERTE SACHGEBIETE (IPC)**

F25B
F24H
F24D
F28D

Der vorliegende Recherchenbericht wurde für alle Patentansprüche erstellt

| Recherchenort | Abschlußdatum der Recherche | Prüfer |
|---|---|---|
| München | 12. Februar 2016 | Szilagyi, Barnabas |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
  Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 40 1097

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-02-2016

| Im Recherchenbericht angeführtes Patentdokument | Datum der Veröffentlichung | Mitglied(er) der Patentfamilie | Datum der Veröffentlichung |
|---|---|---|---|
| DE 202013008465 U1 | 15-10-2013 | KEINE | |
| AT 411391 B | 29-12-2003 | KEINE | |
| EP 1279909 A2 | 29-01-2003 | AT 404831 T<br>DE 10234496 A1<br>DK 1279909 T3<br>EP 1279909 A2 | 15-08-2008<br>06-02-2003<br>08-12-2008<br>29-01-2003 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008034561 A2
- EP 1985948 A1
- US 4509337 A1
- DE 102012024073 A1
- DE 102011102036 B4
- DE 19908666 A1
- DE 3408193 C2

**In der Beschreibung aufgeführte Nicht-Patentliteratur**

- **T. NUNEZ.** Charakterisierung und Bewertung von Adsorbentien für Wärmetransformationsanwendungen. *der Dissertation,* 2001
- **Y. H. ZURIGAT et al.** Stratified Thermal Storage Tank Inlet Mixing Characterization. *Applied Energy,* 1988, vol. 30, 99-111